# EUROPÄISCHE PATENTSCHRIFT

(11) **EP 2 135 038 B1**
(45) Veröffentlichungstag und Bekanntmachung des Hinweises auf die Patenterteilung: **26.12.2012**
(21) Anmeldenummer: 08734798.5
(22) Anmeldetag: 27.03.2008
(51) Int. Cl.: G01C 21/36

(54) **KRAFTFAHRZEUG-NAVIGATIONSSYSTEM**
MOTOR VEHICLE NAVIGATION SYSTEM
SYSTÈME DE NAVIGATION D'AUTOMOBILE

(30) Priorität: 12.04.2007 DE 102007017174
(43) Veröffentlichungstag der Anmeldung: 23.12.2009
(73) Patentinhaber: Bayerische Motoren Werke Aktiengesellschaft, 80809 München (DE)
(72) Erfinder: TAVA, Marcello, 80469 München (DE); BERGER, Roman, 81827 Muenchen (DE)
(74) Vertreter: Mayer-Martin, Christian
(86) Internationale Anmeldenummer: PCT/EP2008/002403
(87) Internationale Veröffentlichungsnummer: WO 2008/125192

(56) Entgegenhaltungen:
- EP-A- 1 528 362
- WO-A-2007/012513

## Beschreibung

Die Erfindung betrifft ein Kraftfahrzeug-Navigationssystem.

Es sind Navigationssysteme bekannt, die in Abhängigkeit von einer Startposition oder der aktuellen Position, ausgewählten Routenkriterien (schnell, kurz, Autobahn bevorzugt, ...), und einem Zielort automatisch eine zu befahrende Route berechnen.

In Abhängigkeit von der aktuellen Position und der zu befahrenden Route wird dann beispielsweise vor einer Kreuzung, an der entsprechend der Route nach rechts abzubiegen ist, der Fahrmanöverhinweis "bitte in 300 Metern rechts abbiegen" ermittelt und über eine entsprechende Ausgabeeinrichtung akustisch, beispielsweise durch synthetisierte Sprache, ausgegeben.

Solche akustisch ausgegebenen Fahrmanöverhinweise können insbesondere in der Stadt und auf an sich bekannten Routen für einen Fahrer äußerst störend sein. Eine Deaktivierung der akustischen Ausgabe kann aber beispielsweise später auf der Route dazu führen, dass eine wichtige Autobahn abfahrt verpasst wird, was einen großen Umweg zur Folge hat.

Aus der europäischen Patentanmeldung EP 1 528 362 ist ein System bekannt, bei dem der Fahrer selbst Bedingungen vorgeben kann, um in bestimmten Situationen die Stimmausgabe zu unterdrücken. Beispiele für solche Bedingungen sind dem Fahrer gut bekannte Straßenabschnitte, Gegenden oder bestimmte Straßentypen.

Der Erfindung liegt nun die Aufgabe zugrunde, ein Kraftfahrzeug-Navigationssystem anzugeben, durch das ein Nutzer bedarfsgerecht akustisch über bevorstehende Fahrmanöver informiert wird.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert auf dem Gedanken, Fahrmanöverhinweise automatisch nur dann akustisch auszugeben, wenn deren Nichtbefolgung beispielsweise einen großen Umweg oder eine große Fahrzeitverlängerung zur Folge hätte.

Ein erfindungsgemäßes Kraftfahrzeug-Navigationssystem weist eine Ausgabeeinrichtung zur akustischen Ausgabe von Fahrmanöverhinweisen und eine Prozessoreinrichtung auf, die derart eingerichtet ist, dass eine zu befahrende Route ermittelt wird, dass basierend auf der zu befahrenden Route und der aktuellen Position, insbesondere für den als nächsten zu befahrenden Straßenknotenpunkt (Kreuzung, Gabelung, Abfahrt, Auffahrt, ...), ein Fahrmanöverhinweis (bzw. ein bevorstehendes Fahrmanöver) ermittelt wird, dass zumindest eine Alternativroute, insbesondere zu gleichem Fahrziel und/oder bei Annahme gleicher Routenkriterien, berechnet wird, unter der Annahme, dass dem ermittelten Fahrmanöverhinweis nicht gefolgt wird (bzw. das ermittelte Fahrmanöver nicht durchgeführt wird), und dass in Abhängigkeit von der Differenz zwischen Route und Alternativroute, insbesondere hinsichtlich erwarteter Fahrzeit, Fahrstrecke und/oder Fahrkosten, der Fahrmanöverhinweis (bzw. ein Hinweis auf das ermittelte Fahrmanöver) akustisch ausgegeben wird oder nicht.

Die Alternativroute kann dabei Umkehrmanöver oder Wendemanöver enthalten oder nicht. Die Differenz zwischen Route und Alternativroute kann sich ergänzend oder alternativ auch auf eine Entfernung der Route bzw. der Alternativroute von zumindest einem Point of Interest (Tankstelle, Museum, ...) beziehen.

Handelt es sich bei dem betroffenen Straßenknoten um eine Autobahnabfahrt ist in der Regel die Berechnung einer Alternativroute ausreichend. Bei anderen Straßenknoten kann die Ermittlung mehrerer Alternativrouten vorteilhaft sein. Daher werden gegebenenfalls neben der Route und der Alternativroute weitere Alternativrouten berechnet, die sich aus einer Nichtbefolgung des Fahrmanöverhinweises insbesondere für den als nächsten zu befahrenden Straßenknotenpunkt ergeben. Beispielsweise können beim Zufahren auf eine Kreuzung zweier Straßen neben der Route, welche beispielsweise ein Abbiegen nach links vorsieht, eine erste Alternativroute, bei welcher davon ausgegangen wird, dass das Fahrzeug nach rechts abbiegt, und eine zweite Alternativroute, bei welcher davon ausgegangen wird, dass das Fahrzeug geradeaus fährt, berechnet werden. Es werden dann vorzugsweise die Differenzen zwischen der Route und den Alternativrouten, insbesondere hinsichtlich erwarteter Fahrzeit, Fahrstrecke und/oder Fahrkosten, bestimmt, und die dabei ermittelte maximale Differenz als Maßgabe für die Entscheidung darüber herangezogen, ob der Fahrmanöverhinweis (bzw. ein Hinweis auf das ermittelte Fahrmanöver) ("Bitte links abbiegen") akustisch ausgegeben wird oder nicht.

Dadurch wird erreicht, dass bei entsprechender Einstellung des Kraftfahrzeug-Navigationssystems ein Fahrer nur durch die akustische Ausgabe solcher Fahrmanöverhinweise gestört wird, deren Nicht-Befolgung eine besonders große Fahrstrecken- oder Fahrzeitverlängerung zur Folge hätte, wie beispielsweise das Verpassen einer Autobahnausfahrt.

Gemäß einer Ausführungsvariante der Erfindung ist vorgesehen, dass ein Geradeaus-Fahrmanöver, insbesondere auf der Autobahn oder vor einer Autobahnabfahrt, im Rahmen der Erfindung nicht als Fahrmanöver gilt, und/oder dass ein entsprechender Fahrmanöverhinweis im Rahmen der Erfindung, insbesondere auf der Autobahn oder vor einer Autobahnabfahrt, grundsätzlich nicht ausgegeben wird. Es wird dann, insbesondere auf der Autobahn oder vor einer Autobahnabfahrt, vorzugsweise keine Alternativroute und/oder keine Differenz berechnet und/oder kein akustischer Fahrmanöverhinweis ausgegeben, wenn das Fahrmanöver gemäß Route "Geradeaus" wäre.

Bevorzugt ist vorgesehen, dass ein Fahrmanöverhinweis akustisch ausgegeben wird, wenn die Differenz zwischen Route und Alternativroute, insbesondere hinsichtlich erwarteter Fahrzeit, Fahrstrecke und/oder Fahrkosten, einen vorgegebenen Grenzwert überschreitet.

Alternativ oder ergänzend dazu ist vorgesehen, dass ein Fahrmanöverhinweis akustisch nicht ausgegeben wird, wenn die Differenz zwischen Route und Alternativroute, insbesondere hinsichtlich erwarteter Fahrzeit und/oder Fahrstrecke, einen vorgegebenen Grenzwert nicht überschreitet.

Besonders bevorzugt ist zudem eine Ausgabeeinrichtung zur optischen Ausgabe eines Fahrmanöverhinweises vorgesehen, wobei der Fahrmanöverhinweis unabhängig von der Differenz zwischen Route und Alternativroute, insbesondere hinsichtlich erwarteter Fahrzeit, Fahrstrecke und/oder Fahrkosten, optisch ausgegeben wird.

Dadurch wird ein Fahrer auf jeden Fall optisch über bevorstehende Fahrmanöver informiert. Diese Art der Ausgabe ist nicht so störend wie die akustische Ausgabe

Vorteilhafterweise ist mittels einer Einstelleinrichtung durch eine Bedienperson der Grenzwert einstellbar, um die automatische Unterdrückung der akustischen Ausgabe an die Nutzerbedürfnisse anzupassen.

Eine bevorzugte Ausgestaltung der Erfindung sieht vor, dass Fahrmanöverhinweise in Abhängigkeit von der jeweiligen Differenz zwischen Route und Alternativroute, insbesondere hinsichtlich erwarteter Fahrzeit, Fahrstrecke und/oder Fahrkosten, in verschiedene Fahrmanöverhinweis-Klassen klassifiziert werden, und dass ein Fahrmanöverhinweis in Abhängigkeit von dessen Fahrmanöverhinweis-Klasse akustisch ausgegeben wird oder nicht.

Mittels einer Auswahleinrichtung ist vorzugsweise durch eine Bedienperson zumindest eine Fahrmanöverhinweis-Klasse auswählbar, deren zugehörige Fahrmanöverhinweise akustisch auszugeben sind oder nicht.

Im Folgenden wird die Erfindung anhand von Beispielen näher erläutert.

Zunächst gibt ein Fahrer über eine Eingabeeinrichtung des Kraftfahrzeug-Navigationssystems das Fahrziel ein.

Basierend auf diesem Fahrziel und der aktuellen Position wird durch das Kraftfahrzeug-Navigationssystem eine zu befahrende Route ermittelt und auf einer Anzeigeeinrichtung dargestellt.

Der Fahrer hat nun die Möglichkeit hinsichtlich der akustischen Ausgabe von Fahrmanöverhinweisen aus verschiedenen Optionen zu wählen:
- akustische Ausgabe aller ermittelten Fahrmanöverhinweise,
- keine akustische Ausgabe von Fahrmanöverhinweise,
- Ausgabe nur der kritischen Fahrmanöverhinweise.

Wird durch den Fahrer die Option "Ausgabe nur der kritischen Fahrmanöverhinweise" gewählt, kann er im nächsten Schritt die kritischen Fahrmanöver hinsichtlich Fahrzeitdifferenz und/oder Streckendifferenz definieren.

In diesem Beispiel wird angenommen, dass der Fahrer das Kraftfahrzeug-Navigationssystem derart einstellt, dass ein Fahrmanöverhinweis nur dann akustisch ausgegeben wird, wenn die erwartete Fahrzeitdifferenz zwischen zu befahrender Route und einer Alternativroute (siehe unten) größer als 3 Minuten ist, oder wenn die Streckendifferenz zwischen zu befahrender Route und einer Alternativroute größer als 5 Kilometer ist.

Es wird nun angenommen, dass das Fahrzeug auf der zu befahrenden Route auf eine Gabelung zufährt. Durch das Kraftfahrzeug-Navigationssystem wird ermittelt, dass an dieser Gabelung gemäß der ermittelten Route das Fahrmanöver "Abbiegen nach rechts" durchzuführen ist, und der entsprechende Fahrmanöverhinweis "In 300 Metern bitte rechts abbiegen" auszugeben ist.

Es wird automatisch durch das Kraftfahrzeug-Navigationssystem eine erste Alternativroute berechnet, unter der Annahme, dass das Fahrmanöver "Abbiegen nach rechts" durch den Fahrer nicht durchgeführt wird. Zwischen der Alternativroute und der ursprünglichen Route ergibt sich eine Differenz hinsichtlich der erwarteten Fahrzeit von 2 Minuten und hinsichtlich der Strecke von 3 Kilometer. Diese Differenzen sind kleiner als die vorgegebenen Differenzen (Grenzwerte) von 3 Minuten bzw. 5 Kilometern. Daher erfolgt keine akustische Ausgabe des entsprechenden Fahrmanöverhinweises "In 300 Metern bitte rechts abbiegen".

Es wird nun angenommen, dass das Fahrzeug später auf der zu befahrenden Route auf eine Autobahnausfahrt zufährt. Durch das Kraftfahrzeug-Navigationssystem wird ermittelt, dass an dieser Autobahnausfahrt gemäß der ermittelten Route (dies kann nun auch die vorhin berechnete erste Alternativroute sein) das Fahrmanöver "Abfahren von der Autobahn" durchzuführen ist, und der entsprechende Fahrmanöverhinweis "In 300 Metern bitte von der Autobahn abfahren" auszugeben ist.

Es wird automatisch durch das Kraftfahrzeug-Navigationssystem eine zweite Alternativroute berechnet unter der Annahme, dass das Fahrmanöver "Abfahren von der Autobahn" durch den Fahrer nicht durchgeführt wird. Zwischen der zweiten Alternativroute und der Route (bzw. der ersten Alternativroute) ergibt sich eine Differenz hinsichtlich der erwarteten Fahrzeit von 5 Minuten und hinsichtlich der Strecke von 4 Kilometern. Die Fahrzeit-Differenz ist größer als die vorgegebene Differenz von 3 Minuten. Daher erfolgt eine akustische Ausgabe des entsprechenden Fahrmanöverhinweises " In 300 Metern bitte von der Autobahn abfahren".

Es ist auch möglich, dass verschiedene Arten von Fahrmanöverhinweisen vorgesehen sind, beispielsweise in Abhängigkeit von der Entfernung zwischen Fahrmanöverposition und aktueller Position, und dass die Erfindung nur bei einer bestimmten Art von Fahrmanöverhinweisen Anwendung findet, oder dass die Erfindung bei einer bestimmten Art von Fahrmanöverhinweisen keine Anwendung findet.

Der Einsatz der Erfindung kann beispielsweise abhängig von Straße oder Fahrsituation automatisch oder durch einen Nutzer manuell aktiviert oder deaktiviert werden. Es fallen demnach aus Kraftfahrzeug-Navigationssysteme in den Rahmen der Erfindung, die eine erfindungsgemäße differenzabhängige akustische Ausgabe von Fahrmanöverhinweisen nicht vor jedem Straßenknotenpunkt vorsehen.

## Patentansprüche

1. Kraftfahrzeug-Navigationssystem
- mit einer Ausgabeeinrichtung zur akustischen Ausgabe von Fahrmanöverhinweisen,
- mit einer Prozessoreinrichtung, die derart eingerichtet ist,
- dass eine zu befahrende Route ermittelt wird,
- dass basierend auf der zu befahrenden Route und der aktuellen Position ein Fahrmanöverhinweis ermittelt wird,
- dass zumindest eine Alternativroute berechnet wird unter der Annahme, dass dem ermittelten Fahrmanöverhinweis nicht gefolgt wird, und
- dass in Abhängigkeit von der Differenz zwischen Route und Alternativroute, insbesondere hinsichtlich erwarteter Fahrzeit, Fahrstrecke und/oder Fahrkosten, der Fahrmanöverhinweis akustisch ausgegeben wird oder nicht.

2. Kraftfahrzeug-Navigationssystem nach Anspruch 1,
bei dem der Fahrmanöverhinweis akustisch ausgegeben wird, wenn die Differenz zwischen Route und Alternativroute, insbesondere hinsichtlich erwarteter Fahrzeit, Fahrstrecke und/oder Fahrkosten, einen vorgegebenen Grenzwert überschreitet.

3. Kraftfahrzeug-Navigationssystem nach einem der vorhergehenden Ansprüche,
bei dem der Fahrmanöverhinweis akustisch nicht ausgegeben wird, wenn die Differenz zwischen Route und Alternativroute, insbesondere hinsichtlich erwarteter Fahrzeit, Fahrstrecke und/oder Fahrkosten, einen vorgegebenen Grenzwert nicht überschreitet.

4. Kraftfahrzeug-Navigationssystem nach einem der vorhergehenden Ansprüche,
mit einer Ausgabeeinrichtung zur optischen Ausgabe eines Fahrmanöverhinweises,
bei dem der Fahrmanöverhinweis unabhängig von der Differenz zwischen Route und Alternativroute, insbesondere hinsichtlich erwarteter Fahrzeit, Fahrstrecke und/oder Fahrkosten, optisch ausgegeben wird.

5. Kraftfahrzeug-Navigationssystem nach einem der vorhergehenden Ansprüche,
mit einer Einstelleinrichtung, mittels welcher durch eine Bedienperson der Grenzwert einstellbar ist.

6. Kraftfahrzeug-Navigationssystem nach einem der vorhergehenden Ansprüche,
bei dem Fahrmanöverhinweise in Abhängigkeit von der jeweiligen Differenz zwischen Route und Alternativroute, insbesondere hinsichtlich erwarteter Fahrzeit, Fahrstrecke und/oder Fahrkosten, in verschiedene Fahrmanöverhinweis-Klassen klassifiziert werden, und
bei dem ein Fahrmanöverhinweis in Abhängigkeit von dessen Fahrmanöverhinweis-Klasse akustisch ausgegeben wird oder nicht.

7. Kraftfahrzeug-Navigationssystem nach Anspruch 6,
mit einer Auswahleinrichtung, mittels welcher durch eine Bedienperson zumindest eine Fahrmanöverhinweis-Klasse auswählbar ist, deren zugehörige Fahrmanöverhinweise akustisch auszugeben sind.

8. Kraftfahrzeug-Navigationssystem nach einem der Ansprüche 6 oder 7,
mit einer Auswahleinrichtung, mittels welcher durch eine Bedienperson zumindest eine Fahrmanöverhinweis-Klasse auswählbar ist, deren zugehörige Fahrmanöverhinweise nicht akustisch auszugeben sind.

## Claims

1. A motor vehicle navigation system
- with an output device for acoustically outputting driving manoeuvre instructions,
- with a processor device, which is set up in such a way
- that a route to be travelled is determined,
- that a driving manoeuvre instruction is determined based on the route to be travelled and the current position,
- that at least one alternative route is calculated under the assumption that the determined driving manoeuvre instruction is not followed, and
- that the driving manoeuvre instruction is output acoustically or not depending on the difference between the route and alternative route, more especially with regard to the expected driving time, driving distance and/or driving costs.

2. A motor vehicle navigation system according to claim 1, wherein the driving manoeuvre instruction is output acoustically when the difference between the route and alternative route, more especially with regard to the expected driving time, driving distance and/or driving costs, exceeds a predetermined limit value.

3. A motor vehicle navigation system according to any one of the preceding claims, wherein the driving manoeuvre instruction is not output acoustically when the difference between the route and alternative route, more especially with regard to the expected driving time, driving distance and/or driving costs, does not exceed a predetermined limit value.

4. A motor vehicle navigation system according to any one of the preceding claims, with an output device for optically outputting a driving manoeuvre instruction, wherein the driving manoeuvre instruction is output optically, independently of the difference between the route and alternative route, more especially with regard to the expected driving time, driving distance and/or driving costs.

5. A motor vehicle navigation system according to any one of the preceding claims, with an adjusting device, by means of which the limit value can be adjusted by an operator.

6. A motor vehicle navigation system according to any one of the preceding claims, wherein driving manoeuvre instructions are classified in various driving manoeuvre instruction classes depending upon the respective difference between the route and alternative route, more especially with regard to the expected driving time, driving distance and/or driving costs, and wherein a driving manoeuvre instruction is acoustically output or not depending upon the driving manoeuvre instruction class thereof.

7. A motor vehicle navigation system according to claim 6, with a selection device, by means of which at least one driving manoeuvre instruction class, the associated driving manoeuvre instructions of which are to be acoustically output, can be selected by an operator.

8. A motor vehicle navigation system according to either of claims 6 or 7, with a selection device, by means of which at least one driving manoeuvre instruction class, the associated driving manoeuvre instructions of which are not to be acoustically output, can be selected by an operator.

## Revendications

1. Système de navigation de véhicule comportant :
- une installation d'émission pour l'émission acoustique d'indications de manoeuvre de conduite,
- une installation de processeur conçue pour
^{*} déterminer le trajet à parcourir,
^{*} déterminer une indication de manoeuvre de conduite fondée sur le trajet à parcourir et la position actuelle,
^{*} calculer au moins un trajet alternatif dans l'hypothèse que l'indication de manoeuvre de conduite fournie ne sera pas suivie, et
^{*} émettre ou non de manière acoustique une indication de manoeuvre de conduite en fonction de la différence entre le trajet et le trajet alternatif, notamment concernant le temps de parcours prévisible, le trajet et/ou le coût du trajet.

2. Système de navigation de véhicule selon la revendication 1,
**caractérisé en ce que**
l'indication de manoeuvre de conduite est émise de manière acoustique si la différence entre le trajet et le trajet alternatif, notamment quant au temps de parcours prévisible, au trajet et/ou au coût du trajet dépasse une limite prédéfinie.

3. Système de navigation de véhicule selon l'une des revendications précédentes, selon lequel l'indication de manoeuvre de conduite n'est pas émise de manière acoustique si la différence entre le trajet et le trajet alternatif, notamment quant au temps de parcours prévisible, au trajet et/ou au coût du trajet ne dépasse pas une valeur limite prédéfinie.

4. Système de navigation de véhicule selon l'une des revendications précédentes, comportant une installation d'émission pour l'émission optique d'une indication de manoeuvre, et l'indication de manoeuvre est émise de façon optique, indépendamment de la différence entre le trajet et le trajet alternatif, notamment quant au temps de parcours prévisible, au trajet et/ou au coût du trajet.

5. Système de navigation de véhicule selon l'une des revendications précédentes, comportant une installation de réglage par laquelle l'utilisateur règle la valeur limite.

6. Système de navigation de véhicule selon l'une des revendications précédentes, selon lequel les indications de manoeuvre de conduite sont classées (dans différentes classes d'indications de manoeuvre) en fonction de la différence respective entre le trajet et le trajet alternatif, notamment quant au temps de parcours prévisible, au trajet et/ou au coût du trajet et selon lequel une indication de manoeuvre de conduite est ou non émise de manière acoustique en fonction de sa classe d'indications de manoeuvre de conduite.

7. Système de navigation de véhicule selon la revendication 6, comportant une installation de sélection par laquelle l'utilisateur peut sélectionner au moins une classe d'indications de manoeuvre de conduite dont les indications de manoeuvre de conduite sont émises de manière acoustique.

8. Système de navigation de véhicule selon l'une des revendications 6 ou 7, comportant une installation de sélection par laquelle l'utilisateur peut au moins sélectionner une classe d'indications de manoeuvre de conduite dont les indications de manoeuvre associées ne sont pas émises de manière acoustique.
